# EUROPÄISCHE PATENTSCHRIFT

(11) **EP 3 743 846 B1**
(45) Veröffentlichungstag und Bekanntmachung des Hinweises auf die Patenterteilung: **17.11.2021**
(21) Anmeldenummer: 19701509.2
(22) Anmeldetag: 23.01.2019
(51) Int. Cl.: G06K 7/10

(54) **VORRICHTUNG UND VERFAHREN ZUM CODIEREN VON HF-TRANSPONDERN**
DEVICE AND METHOD FOR CODING HF TRANSPONDERS
DISPOSITIF ET PROCÉDÉ POUR LE CODAGE DE TRANSPONDEURS RF

(30) Priorität: 26.01.2018 DE 102018000628
(43) Veröffentlichungstag der Anmeldung: 02.12.2020
(73) Patentinhaber: Muehlbauer GmbH & Co. KG, 93426 Roding (DE)
(72) Erfinder: BUFE, Henrik, 01109 Dresden (DE); VOIGTLAENDER, Georg, 01099 Dresden (DE)
(74) Vertreter: Schmidt, Steffen J.
(86) Internationale Anmeldenummer: PCT/EP2019/051554
(87) Internationale Veröffentlichungsnummer: WO 2019/145319

(56) Entgegenhaltungen:
- DE-U1-202013 004 511
- US-A1- 2007 120 670
- US-A1- 2008 231 419

## Beschreibung

### Hintergrund

Hier werden eine Vorrichtung und ein Verfahren zum Codieren von HF-Transpondern beschrieben. Insbesondere werden eine Vorrichtung und ein Verfahren zum Codieren von RFID-Transpondern im HF-Wellenlängenbereich beschrieben. Merkmale und Eigenschaften der Vorrichtung und des Verfahrens sind in den Ansprüchen definiert; aber auch die Beschreibung und die Figuren offenbaren Charakteristika der Vorrichtung und des Verfahrens und deren unterschiedliche Aspekte.

Solche HF-Transponder werden zum Beispiel für Etiketten, wie etwa Warenauszeichnungen (price-tags), Wert- oder Sicherheitsdokumente oder dergleichen verwendet und haben in der Regel einen ein- oder mehrschichtigen Körper.

Um steigenden Sicherheitsanforderungen Rechnung zu tragen, werden zum Beispiel zunehmend auch in Wert- und Sicherheitsdokumenten (Debit-, Kreditkarten, Pässe, Personalausweise, Zugangskontrollkarten, etc.) Transponder(inlays) eingesetzt. RFID-Transponder für Wert- und Sicherheitsdokumente werden heute häufig bis auf Personalisierungsdaten einheitlich gefertigt und anschließend mit individuellen Datensätzen und/oder transponder-individuellen Informationen codiert.

Ein HF-Transponder, insbesondere für RFID (= Radio Frequency Identification) Anwendungen, hat im Wesentlichen einen Halbleiterchip und eine als Spule, Spirale oder als Dipol ausgestaltete Antenne. Die Antenne ermöglicht einen berührungslosen Datenzugriff, d.h. ein berührungsloses, automatisiertes Einschreiben bzw. Codieren und/oder Auslesen von (Personalisierungs-)Daten in/aus dem Halbleiterchip des Transponders.

Aus der US 2007/0120670 A1 ist ein System zur kontinuierlichen RFID-Codierung bekannt. Das System weist eine Sensor-Antenne und eine Codier-Antenne auf. RFID-Tags mit ihren Transpondern werden nacheinander an diesen beiden Antennen vorbeigeführt, wobei die Sensor-Antenne zur Identifizierung der Transponder dient und die Codier-Antenne zur Codierung der Transponder.

Aus der US 2008/0231419 A1 ist eine Vorrichtung bekannt, mit der Daten in RFID-Tags gespeichert werden. Hierzu werden die Tags an mehreren Stationen vorbeigeleitet, die jeweils eine Antenne aufweisen. Dabei dient eine erste Station zur Identifizierung der Tags und an einer zweiten Station werden die Tags mit den Daten beschrieben.

### Stand der Technik

Zum Codieren von HF-Transpondern mit transponderindividuellen Informationen ist es bisher nötig, jeden HF-Transponder durch eine entsprechende Codiervorrichtung selektiv anzusprechen und zu beschreiben bzw. zu codieren. Hierzu wird der zu beschreibende Transponder in den Erfassungsbereich einer HF-Antenne geführt, verweilt dort während des Ansprechens und des Beschreibens und wird abschließend wieder aus dem Erfassungsbereich der HF-Antenne entfernt, sodass ein jeweils weiterer HF-Transponder zugeführt bzw. codiert werden kann. Mit anderen Worten werden die HF-Transponder nacheinander in einem "Stop & Go"-Verfahren der Codiervorrichtung zugeführt, codiert und entfernt. Nachteilig an diesem Verfahren ist jedoch, dass selbst wenn die Ansprech-, Beschreibungs- und Transportvorgänge vollständig oder zumindest nahezu optimiert sind, aufgrund der nötigen Beschleunigung bzw. der nötigen Abbremsung der HF-Transponder (bzw. einer Transportvorrichtung, welche die Transponder bereit hält) im Bereich der Codiervorrichtung stets ein Zeitverlust auftritt. Da es sich beim Beschleunigen oder Abbremsen des HF-Transponders (bzw. der Transportvorrichtung) um einen mechanischen Vorgang handelt, lässt sich dieser zudem zumindest nicht beliebig beschleunigen oder verzögern. Eine Codierung von HF-Transpondern kann zum Beispiel in einer Zeitdauer von 50 bis 300 Millisekunden geschehen, sodass eine Zeitdauer, in der ein codierter HF-Transponder aus dem Erfassungsbereich einer Codiervorrichtung mechanisch entfernt wird und/oder ein weiterer zu codierender Transponder der Vorrichtung zugeführt wird, stets zu einer relevanten Verzögerung des Codiervorgangs führt. Aufgrund der Zuführung bzw. des Entfernens der HF-Transponder ergeben sich regelmäßig Zeitfenster, in denen die Codiervorrichtung nicht aktiv einen Transponder codiert. Hierdurch wird die Durchsatzgeschwindigkeit bzw. die maximale Fertigungsrate einer Codiervorrichtung limitiert.

### Zu lösendes Problem

Trotz bekannter Codiervorrichtungen besteht somit ein Bedarf an einer verbesserten Vorrichtung, welche insbesondere eine kontinuierliche Codierung einer Mehrzahl von HF-Transpondern erlaubt, ohne dass an einer Bearbeitungsstation Wartezeiten für ein Zuführen oder Entfernen einzelner zu codierender HF-Transponder auftreten.

### Lösung, Vorteile und Ausgestaltung

Das Problem wird durch eine Vorrichtung nach dem Anspruch 1 und durch ein Verfahren nach dem Anspruch 8 gelöst. Vorteilhafte Ausgestaltungen des Verfahrens und der Vorrichtung sind durch die weiteren Ansprüche definiert.

Eine Vorrichtung für eine Codierung von HF-Transpondern umfasst eine Fördervorrichtung, welche dazu angeordnet und ausgebildet ist, HF-Transponder an einer Mehrzahl von Bearbeitungsstationen in einer kontinuierlichen Bewegung vorbeizuführen. Insbesondere kann eine quasi-endlose Folge von zu codierenden HF-Transpondern in einer kontinuierlichen Bewegung und mit einer zumindest im Wesentlichen konstanten Geschwindigkeit an/durch eine/r Mehrzahl von Bearbeitungsstationen vorbeigeführt/geführt werden. Die HF-Transponder können insbesondere so durch die Fördervorrichtung geführt werden, dass sich weder eine Position/ein Abstand der HF-Transponder zueinander, noch eine Position der Transponder in/auf der Fördervorrichtung verändert. Die Fördervorrichtung kann zum Beispiel ein über Rollen geführtes Förderband sein, welches dazu geeignet ist, eine Mehrzahl von HF-Transpondern jeweils nacheinander an der Mehrzahl von Bearbeitungsstationen in einer kontinuierlichen Bewegung vorbeizuführen.

Die HF-Transponder können hierbei so auf/durch die Fördervorrichtung angeordnet sein, dass der Abstand zwischen zwei geförderten HF-Transpondern entlang der Förderrichtung jeweils kleiner ist, als eine Längsausdehnung der geförderten Transponder. Die Längsausdehnung bezeichnet hierbei eine Länge bzw. eine räumliche Ausdehnung der HF-Transponder entlang der Förderrichtung der Fördervorrichtung. Mit anderen Worten ist die Längsausdehnung die räumliche Ausdehnung der HF-Transponder in einer Raumdimension entlang des Förderweges.

Weiter umfasst die Vorrichtung eine erste Bearbeitungsstation, welche dazu angeordnet und ausgebildet ist, jeweils an ihr vorbeigeführte HF-Transponder zu identifizieren/klassifizieren. Identifizieren bezeichnet hierbei das Erfassen eines spezifischen Merkmals eines einzelnen HF-Transponders, zum Beispiel einer ausgelesenen Transponderkennung oder einer optisch erkennbaren Markierung, welche die Zuordnung des HF-Transponders zu einer gespeicherten Information, zum Beispiel zu einem zu übertragenden Datensatz, ermöglicht. Auch können HF-Transponder als zu einer Gruppe gehörig oder als zu einem speziellen Typ von HF-Transpondern gehörig identifiziert/klassifiziert werden. Zum Beispiel kann ein einzelner HF-Transponder als zu einer vorbestimmten Gruppe gehörig klassifiziert werden, wobei ein vorbestimmter Datensatz jeweils an die HF-Transponder der vorbestimmten Gruppe zu übertragen ist.

Zum Beispiel kann die erste Bearbeitungsstation eine Ausleseantenne umfassen, welche dazu geeignet ist, einen an der ersten Bearbeitungsstation vorbeigeführten HF-Transponder zu identifizieren, insbesondere durch das Auslesen einer transponderspezifischen Information (ID).

Weiter umfasst die Vorrichtung eine zweite Bearbeitungsstation mit zumindest einer ersten HF-Antenne, welche entlang des Förderwegs der Fördervorrichtung angeordnet ist. Die erste HF-Antenne weist hierbei einen Sendebereich auf, welcher dazu angeordnet und ausgebildet ist, eine Mehrzahl von durch die Fördervorrichtung an der zweiten Bearbeitungsstation vorbeigeführten HF-Transpondern gleichzeitig zu erfassen. Weiter ist die zweite Bearbeitungsstation dazu ausgebildet, jeweils einen der durch den Sendebereich der ersten HF-Antenne erfassten HF-Transponder zur Übertragung von Daten auszuwählen und Daten an den ausgewählten HF-Transponder zu übertragen, wobei die übertragenen Daten abhängig von einer vorangegangenen Identifikation des ausgewählten HF-Transponders durch die erste Bearbeitungsstation ermittelt sind.

Die erste HF-Antenne hat hierbei eine Längsausdehnung, welche zumindest der addierten Längsausdehnung einer Mehrzahl von HF-Transpondern entspricht. Die Längsausdehnung bezeichnet hierbei eine Länge bzw. eine räumliche Ausdehnung der HF-Antenne bzw. der HF-Transponder entlang der Förderrichtung der Fördervorrichtung. Mit anderen Worten ist die Längsausdehnung die Distanz, über die sich eine HF-Antenne entlang des Förderweges der HF-Transponder erstreckt bzw. die räumliche Ausdehnung der HF-Transponder in einer Raumdimension entlang des Förderweges.

Der Sendebereich der ersten HF-Antenne hat hierbei zumindest dieselbe oder eine größere Längsausdehnung wie die erste HF-Antenne, sodass sich eine Mehrzahl von geförderten HF-Transpondern gleichzeitig im Sendebereich der HF-Antenne befinden kann, wobei die HF-Transponder kontinuierlich durch die Fördervorrichtung in der Förderrichtung bewegt werden.

Der Sendebereich der ersten HF-Antenne kann zum Beispiel einen Bereich der Fördervorrichtung so erfassen, dass sich zu jedem Betriebszeitpunkt zumindest zwei oder drei HF-Transponder einer quasi-endlosen Folge von geförderten HF-Transpondern im Sendebereich der ersten HF-Antenne befinden.

Ein Vorteil hierbei ist, dass die zweite Bearbeitungsstation kontinuierlich HF-Transponder codieren kann, ohne einen Codierungsbetrieb aufgrund eines Entfernens eines bereits codierten HF-Transponders oder des Zuführens eines HF-Transponders zu unterbrechen.

Die zweite Bearbeitungsstation kann dazu ausgebildet sein, jeden der zuvor durch die erste Bearbeitungsstation identifizierten/klassifizierten HF-Transponder mit der ersten HF-Antenne anzusprechen und anschließend, sofern das Ansprechen des jeweils identifizierten/klassifizierten HF-Transponders erfolgreich war, den HF-Transponder zu codieren, wobei hierzu vorgesehene Codierungsdaten abhängig von der Identifizierung/Klassifizierung des Transponders zu ermitteln/auszuwählen/ bereitzustellen/zu übertragen sind. Nach der Beendigung der Codierung eines identifizierten/klassifizierten HF-Transponders kann unmittelbar die Codierung eines jeweils weiteren HF-Transponders erfolgen. Die Reihenfolge des Ansprechens bzw. des Codierens der HF-Transponder kann hierbei der Reihenfolge des Identifizierens/ Klassifizierens der HF-Transponder durch die erste Bearbeitungsstation entsprechen. Ein Ansprechen bezeichnet hierbei das Aussenden eines Ansprechsignals an einen bestimmten identifizierten/klassifizierten HF-Transponder und das Empfangen einer HF-Transponderantwort auf das Ansprechsignal, wobei die erste HF-Antenne der zweiten Bearbeitungsstation zu beidem geeignet ist. Ein Ansprechen kann als erfolgreich gelten, wenn auf das Aussenden eines Ansprechsignals eine Antwort des bestimmten identifizierten/klassifizierten HF-Transponders, an welchen sich das ausgesendete Ansprechsignal richtet, erfasst werden kann.

Erfindungsgemäß ist die zweite Bearbeitungsstation dazu eingerichtet, im Falle eines nicht erfolgreichen Ansprechens eines ersten zuvor identifizierten/klassifizierten HF-Transponders unmittelbar mit dem Ansprechen eines dem ersten identifizierten/ klassifizierten HF-Transponder folgenden weiteren identifizierten/klassifizierten HF-Transponders fortzufahren und diesen, sofern das Ansprechen des weiteren identifizierten/klassifizierten HF-Transponders erfolgreich war, zu codieren. Die zweite Bearbeitungsstation ist weiter dazu eingerichtet, nach dem Abschluss der Codierung des weiteren identifizierten/klassifizierten HF-Transponders erneut den ersten identifizierten/klassifizierten HF-Transponder anzusprechen.

Ein Vorteil hierbei ist, dass im Falle eines erfolglosen Ansprechens eines HF-Transponders unmittelbar mit der Codierung eines weiteren im Erfassungsbereich der ersten HF-Antenne befindlichen HF-Transponders fortgefahren werden kann. Ein Fertigungszeitverlust kann somit reduziert werden. Ein Vorteil gegenüber dem "Stop & Go" Verfahren ist hierbei, dass unverzüglich und ohne weitere, insbesondere mechanische, Steuerungsmaßnahmen der Fördervorrichtung mit der Codierung von Transpondern fortgefahren werden kann. Weiter kann anschließend ein erneuter Ansprechversuch für den zuvor erfolglos angesprochenen HF-Transponder durchgeführt werden, sodass ein noch im Sendebereich der ersten HF-Antenne befindlicher und zunächst erfolglos angesprochener HF-Transponder noch codiert werden kann, ohne die kontinuierliche Förderung der HF-Transponder zu unterbrechen.

Die zweite Bearbeitungsstation kann weiter dazu eingerichtet sein, ein Ansprechen eines HF-Transponders maximal zweimal oder dreimal durchzuführen.

Das Ansprechen und Codieren von HF-Transpondern durch die zweite Bearbeitungsstation kann kontinuierlich, also zum Beispiel ohne ein Ansprechen oder Codieren auslösende Trigger-Signale, erfolgen. Ein Vorteil hierbei ist, dass die Implementierung der zweiten Bearbeitungsstation vereinfacht werden kann.

Die zweite Bearbeitungsstation kann dazu ausgebildet sein, einen Fertigungsbetrieb bzw. Codierungsbetrieb zeitverzögert nach einer ersten erfolgreichen Identifizierung eines HF-Transponders durch die erste Fertigungsstation aufzunehmen, wobei die Zeitverzögerung nach dem räumlichen Abstand der ersten und der zweiten Bearbeitungsstation und der Fördergeschwindigkeit der Fördervorrichtung bemessen werden kann. Ein Vorteil hierbei ist, dass die Aufnahme eines Fertigungsbetriebs bzw. Codierungsbetriebs der Vorrichtung hierdurch verbessert werden kann, indem zunächst erfolglose Ansprechversuche der zweiten Bearbeitungsstation vermieden werden.

In einer Weiterbildung kann die Fördervorrichtung dazu geeignet sein, jeweils eine Mehrzahl von orthogonal zur Förderrichtung nebeneinander angeordneten HF-Transpondern und/oder eine Mehrzahl von entlang der Förderrichtung hintereinander angeordneten HF-Transpondern an der Mehrzahl der Bearbeitungsstationen vorbeizuführen.

Ein Vorteil hierbei ist, dass Folgen von jeweils parallel nebeneinander angeordneten HF-Transpondern gleichzeitig gefördert und/oder codiert werden können, und eine Fertigungskapazität oder Codierungskapazität der Vorrichtung somit vervielfacht werden kann.

Alternativ oder ergänzend zur beschriebenen Ausleseantenne kann die erste Bearbeitungsstation in einer Weiterbildung zumindest einen optisch erfassenden Sensor, zum Beispiel einen Kamerasensor, aufweisen, welcher dazu geeignet ist, einen HF-Transponder anhand optisch erkennbarer Merkmale zu identifizieren und/oder einen Eigenschaftsfehler eines HF-Transponders zu erfassen und/oder einen Lagefehler eines HF-Transponders auf der Fördervorrichtung zu erfassen.

Das Identifizieren anhand optisch erkennbarer Merkmale kann zum Beispiel durch das optische Erfassen von Merkmalen, welche den HF-Transpondern bereits vor Beginn der Codierung aufgedruckt wurden, zum Beispiel Streifen- oder QR-Codes, geschehen. Ein erkannter Lagefehler und/oder ein erfasster Eigenschaftsfehler, insbesondere eine Beschädigung, können durch die erste Bearbeitungsstation mit einer Identifikations- oder Klassifizierungsinformation verknüpft werden und einer Steuerung oder einer weiteren Bearbeitungsstation übermittelt werden. Insbesondere kann die Vorrichtung auch eine Aussonderungsstation umfassen, welche identifizierte HF-Transponder mit erkannten Lage- und/oder Eigenschaftsfehlern aussondert.

Ist die Fördervorrichtung dazu ausgebildet, jeweils eine Mehrzahl von orthogonal zur Förderrichtung nebeneinander angeordneten HF-Transpondern zu fördern kann die erste Bearbeitungsstation hierbei analog dazu eingerichtet sein, mehrere jeweils orthogonal zur Förderrichtung nebeneinander angeordnete HF-Transponder gleichzeitig zu identifizieren/zu erfassen. Hierzu kann die erste Bearbeitungsstation zum Beispiel mehrere jeweils orthogonal zur Förderrichtung nebeneinander angeordnete Ausleseantennen und/oder optische Sensoren aufweisen.

In einer Variante kann die erste Bearbeitungsstation Abschirmungselemente umfassen, welche dazu angeordnet und ausgebildet sind, jeweils alle bis auf einen an der ersten Bearbeitungsstation vorbeigeführten HF-Transponder von einem Erfassungsbereich der Ausleseantenne elektromagnetisch abzuschirmen.

Die Abschirmungselemente können insbesondere aus einem Material mit einer geringen Durchlässigkeit für elektromagnetische Strahlung gefertigt sein.

Die Abschirmungselemente können zum Beispiel eine Öffnung bzw. Auslassung in der Umrissform eines zu identifizierenden/klassifizierenden HF-Transponders aufweisen und zwischen den durch die Fördervorrichtung geförderten HF-Transpondern und einer Ausleseantenne angeordnet sein.

In einer Weiterbildung kann die zweite Bearbeitungsstation weiter eine zweite HF-Antenne umfassen. Die erste HF-Antenne und die zweite HF-Antenne können gleichartig ausgestaltet sein. Die erste HF-Antenne und die zweite HF-Antenne können durch einen gemeinsamen Spannungsteiler mit elektrischer Energie und/oder elektrischen Signalen versorgt werden.

Die erste und/oder die zweite HF-Antenne können eine Längsausdehnung von 30 Zentimetern haben.

Die zweite HF-Antenne, kann insbesondere in der Förderrichtung parallel zur ersten HF-Antenne angeordnet sein. Die erste und die zweite HF-Antenne können dazu ausgebildet sein, jeweils ein übereinstimmendes elektromagnetisches Signal abzugeben. Die erste und die zweite HF-Antenne können somit im Zusammenwirken eine Abfrage und/oder eine Codierung eines HF-Transponders durchführen. Alternativ können die beiden HF-Antennen jeweils eine Abfrage und/oder eine Codierung von zwei parallel geförderten HF-Transpondern, insbesondere mit derselben Codierinformation bzw. demselben vorbestimmten Datensatz, durchführen.

Ist die Fördervorrichtung dazu ausgebildet, jeweils eine Mehrzahl von orthogonal zur Förderrichtung nebeneinander angeordneten HF-Transpondern zu fördern, kann die zweite Bearbeitungsstation hierbei analog dazu eingerichtet sein, mehrere jeweils orthogonal zur Förderrichtung nebeneinander angeordnete HF-Transponder gleichzeitig abzufragen und/oder zu codieren. Hierzu kann die zweite Bearbeitungsstation zum Beispiel mehrere jeweils orthogonal zur Förderrichtung nebeneinander angeordnete HF-Antennen oder HF-Antennenpaare aufweisen.

In einer Weiterbildung kann die Vorrichtung ferner eine dritte Bearbeitungsstation mit einer dritten HF-Antenne und/oder eine vierten HF-Antenne umfassen, wobei die dritte HF-Antenne und/oder die vierte HF-Antenne jeweils einen Sendebereich aufweisen kann, welcher dazu angeordnet und ausgebildet ist, eine Mehrzahl der durch die Fördervorrichtung an der dritten Bearbeitungsstation vorbeigeführten HF-Transpondern gleichzeitig zu erfassen.

Die dritte Bearbeitungsstation kann dazu ausgebildet sein, jeweils einen der durch den Sendebereich der dritten und/oder vierten HF-Antenne erfassten HF-Transponder zur Übertragung von Daten auszuwählen und Daten an den ausgewählten HF-Transponder zu übertragen, wobei die übertragenen Daten abhängig von einer Identifikation des ausgewählten HF-Transponders durch die erste Bearbeitungsstation ermittelt sind.

Die dritte Bearbeitungsstation kann zum Beispiel gleichartig zu einer zuvor beschriebenen Variante der zweiten Bearbeitungsstation ausgestaltet sein.

Ein Vorteil hierbei ist, dass zum Beispiel ein erster Teil eines vorbestimmten Datensatzes durch die zweite Bearbeitungsstation übertragen werden kann und ein zweiter Teil eines vorbestimmten Datensatzes durch die dritte Bearbeitungsstation übertragen werden kann, wobei eine hohe Fördergeschwindigkeit der einzelnen Transponder beibehalten werden kann. Da die HF-Antennen in der betrieblichen Praxis nicht mit einer beliebig großen Längsausdehnung ausgestaltet werden können, kann bei einer vorbestimmten kontinuierlichen Fördergeschwindigkeit nur eine begrenzte Datenmenge an die HF-Transponder übertragen werden, da diese sonst bereits während des Übertragungsvorgangs den Sendebereich der HF-Antennen verlassen würden. Würde hingegen die Fördergeschwindigkeit reduziert, würde zum Beispiel die erste Bearbeitungsstation, gemessen an der technisch möglichen Geschwindigkeit zur Identifizierung/Klassifizierung der Bauteile, nicht oder nur unzureichend ausgelastet. Daher bietet die Anordnung von zwei (oder mehr) gleichartig ausgestalteten Bearbeitungsstationen zur Codierung von HF-Transpondern hintereinander einen synergistischen Mehrwert.

Weiter kann die Vorrichtung eine vierte Bearbeitungsstation umfassen, welche dazu angeordnet und ausgebildet ist, jeweils eine Oberfläche von vorbeigeführten HF-Transpondern zu bedrucken, zum Beispiel mit einem Streifen- oder QR-Code.

In einer Variante kann die Vorrichtung zudem eine Datenbank aufweisen, welche jeweils an einen bestimmten HF-Transponder zu übertragende Daten/Datensätze speichert und/oder eine Steuerung umfassen, welche dazu ausgebildet ist, abhängig von einer Identifizierung eines HF-Transponders durch die erste Bearbeitungsstation, in der Datenbank gespeicherte Daten/Datensätze zu ermitteln. Die durch die Steuerung ermittelten Daten/Datensätze können mit einer Information, welche die Daten/Datensätze dem jeweils identifizierten/klassifizierten HF-Transponder zuordnet, an die zweite und/oder dritte Bearbeitungsstation übertragen werden. Ferner kann die Steuerung auch eine Information, welche einen erfassten Eigenschafts- oder Lagefehler eines Bauteils angibt, einem jeweils identifizierten/klassifizierten HF-Transponder zuordnen.

Ein Verfahren zur Verwendung der Vorrichtung nach einem der vorangegangenen Ansprüche umfasst die Schritte:
- Kontinuierliches Fördern von HF-Transpondern in einer Förderrichtung, vorbei an einer Mehrzahl von Bearbeitungsstationen, durch eine Fördervorrichtung;
- Identifizieren eines HF-Transponders mit einer ersten Bearbeitungsstation;
- Erfassen des identifizierten HF-Transponders mit einer zweiten Bearbeitungsstation, wobei die zweite Bearbeitungsstation zumindest eine erste HF-Antenne mit einen Sendebereich aufweist, welcher dazu angeordnet und ausgebildet ist, eine Mehrzahl der durch die Fördervorrichtung an der zweiten Bearbeitungsstation vorbeigeführten HF-Transponder gleichzeitig zu erfassen und die zweite Bearbeitungsstation dazu ausgebildet ist, den identifizierten HF-Transponder aus einer Mehrzahl von erfassten HF-Transpondern zur Übertragung von Daten auszuwählen;
- Übertragen von Daten an den identifizierten HF-Transponder mit der zweiten Bearbeitungsstation, wobei die übertragenen Daten abhängig von einer Identifikation des ausgewählten HF-Transponders durch die erste Bearbeitungsstation ermittelt sind.

Optional kann das Verfahren weiter zumindest einen der folgenden Schritte aufweisen:
- Erfassen des identifizierten HF-Transponders mit einer dritten Bearbeitungsstation, wobei die dritte Bearbeitungsstation zumindest eine dritte HF-Antenne mit einen Sendebereich aufweist, welcher dazu angeordnet und ausgebildet ist, eine Mehrzahl der durch die Fördervorrichtung an der dritten Bearbeitungsstation vorbeigeführten HF-Transponder gleichzeitig zu erfassen und die dritte Bearbeitungsstation dazu ausgebildet ist, den identifizierten HF-Transponder aus einer Mehrzahl von erfassten HF-Transpondern zur Übertragung von Daten auszuwählen;
- Übertragen von Daten an den identifizierten HF-Transponder mit der dritten Bearbeitungsstation, wobei die übertragenen Daten abhängig von einer Identifikation des ausgewählten HF-Transponders durch die erste Bearbeitungsstation ermittelt sind;
- Bedrucken einer Oberfläche des identifizierten Transponders mit einer vierten Bearbeitungsstation.

Die vorstehend erläuterten Vorrichtungs- und Verfahrensdetails sind zwar im Zusammenhang dargestellt; es sei jedoch darauf hingewiesen, dass sie auch unabhängig voneinander sind und auch frei miteinander kombinierbar sind.

Auch die Ansprüche limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen hier offenbart.

### Kurzbeschreibung der Zeichnungen

Mögliche Ausführungen werden nun anhand der beigefügten schematischen Darstellungen näher erläutert:
- Fig. 1: zeigt ein Beispiel für eine Vorrichtung zum Codieren von HF-Transpondern, welche durch ein Förderband kontinuierlich an Bearbeitungsstationen vorbeigeführt werden.
- Fig. 2: zeigt eine Antennenanordnung, wie sie zum Beispiel in der zweiten Bearbeitungsstation und/oder der dritten Bearbeitungsstation implementiert werden kann.

### Detaillierte Beschreibung der Zeichnungen

Die hier beschriebenen Vorrichtungsvarianten sowie deren Funktions- und Betriebsaspekte dienen lediglich dem besseren Verständnis ihrer Struktur, Funktionsweise und Eigenschaften; sie schränken die Offenbarung nicht etwa auf die gezeigten Ausführungsbeispiele ein. Die Figuren sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Figuren oder im Text offenbart ist/sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, sodass alle denkbaren Kombinationen den beschriebenen Vorrichtungen zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Figuren umfasst und können zum Gegenstand weiterer Ansprüche gemacht werden. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

In den Figuren sind einander entsprechende oder funktionsähnliche Bauteile mit übereinstimmenden Bezugszeichen versehen. Die Vorrichtungen und Verfahren werden nun anhand von Ausführungsbeispielen beschrieben.

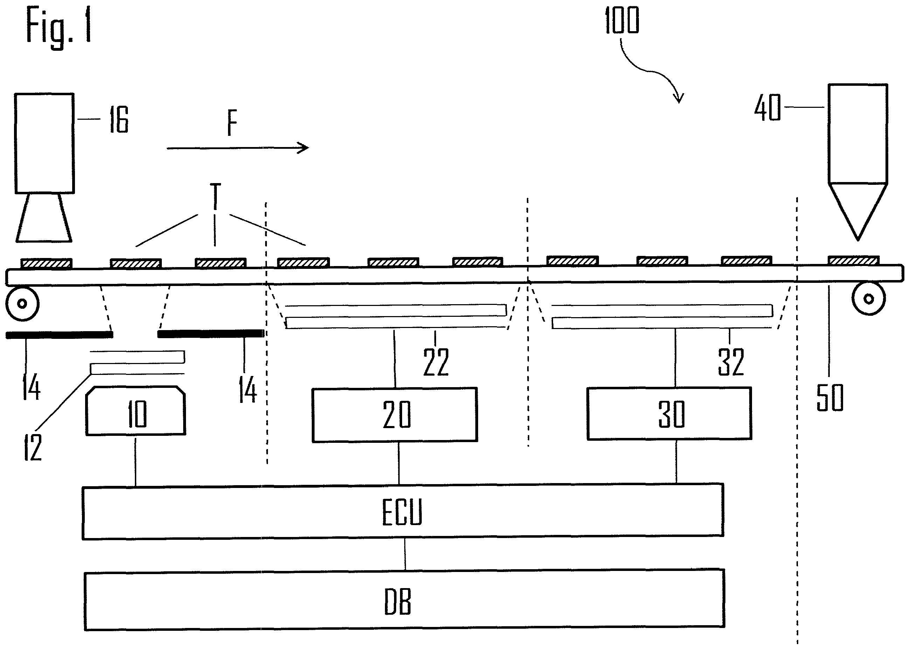

Fig. 1 zeigt ein Beispiel für eine Vorrichtung 100 zur Codierung von HF-Transpondern. Eine Fördervorrichtung, welche im gezeigten Beispiel ein quasi-endloses umlaufendes Förderband 50 ist, fördert eine Mehrzahl von HF-Transpondern T kontinuierlich mit einer vorbestimmten Fördergeschwindigkeit in einer Förderrichtung F. Die HF-Transponder T werden im gezeigten Beispiel durch eine Anordnungsvorrichtung (nicht gezeigt) auf dem Förderband 50 angeordnet, wobei ein Abstand zwischen zwei HF-Transpondern T jeweils geringer ist, als die räumliche Ausdehnung der HF-Transponder T auf dem Förderband 50 in der Förderrichtung F.

Eine erste Bearbeitungsstation 10 umfasst eine Ausleseantenne 12, die Abschirmungselemente 14 und einen optisch erfassenden Kamerasensor 16.

Die Abschirmungselemente 14 sind zwischen der Ausleseantenne 12 und dem Förderband 50, auf welchem die HF-Transponder T in der Förderrichtung F an der ersten Bearbeitungsstation 10 vorbeigeführt werden, positioniert. Die Abschirmungselemente 14 umformen eine Auslassung, sodass der Erfassungsbereich der Ausleseantenne 12 auf maximal einen der vorbeigeführten HF-Transponder T reduziert wird. Mit anderen Worten kann beschrieben werden, dass die Auslassung, welche durch die Abschirmungselemente 14 umformt wird, mit der Geometrie der HF-Transponder T korrespondiert und den Erfassungsbereich der Ausleseantenne 12 beschränkt, sodass sich stets maximal ein einziger HF-Transponder T im Erfassungsbereich der Ausleseantenne 12 befindet. Hierdurch kann sichergestellt werden, dass die HF-Transponder T in der Reihenfolge identifiziert werden, in der sie durch das Förderband 50 an der Auslassung der Abschirmungselemente 14 vorbeigeführt werden.

Die erste Bearbeitungsstation 10 identifiziert jeden der vorbeigeführten HF-Transponder T, indem sie mit Hilfe der Ausleseantenne 12 eine transponderspezifische Kennung (ID) aus jedem der vorbeigeführten HF-Transponder T drahtlos ausliest (RFID). Zudem überträgt die erste Bearbeitungsstation 10 jeweils entsprechende Identifikationsinformationen an eine Steuerung ECU.

Weiter überprüft die erste Bearbeitungsstation 10 mit dem Kamerasensor 16 die HF-Transponder T auf eine Beschädigung und auf eine mögliche Fehlpositionierung auf der Fördervorrichtung 50. Werden eine Beschädigung und/oder eine mögliche Fehlpositionierung eines HF-Transponders festgestellt, so wird eine entsprechende Information durch die erste Bearbeitungsstation 10 mit der Identifikationsinformation des beschädigten oder fehlpositionierten HF-Transponders verknüpft und an die Steuerung ECU übertragen.

Während die HF-Transponder T durch das Förderband 50 gefördert werden, ermittelt die Steuerung ECU anhand der transponderspezifischen Kennung (ID) für jeden HF-Transponder T jeweils einen an/auf den HF-Transponder zu übertragenden Datensatz und ruft diesen aus einer Datenbank DB ab. Weiter teilt die Steuerung ECU den zu übertragenden Datensatz jeweils in zwei im Wesentlichen umfangsgleiche Teildatensätze auf und überträgt jeweils einen der Teildatensätze jeweils gemeinsam mit der transponderspezifischen Kennung (ID) an eine zweite und an eine dritte Bearbeitungsstation 20, 30. Ein erster Teildatensatz wird mit der transponderspezifischen Kennung (ID) an die zweite Bearbeitungsstation 20 übertragen und ein zweiter Teildatensatz wird mit der transponderspezifischen Kennung (ID) an die dritte Bearbeitungsstation 30 übertragen. Weiter steuert die Steuerung ECU eine vierte Bearbeitungsstation 40, welche im Folgenden noch genauer beschrieben wird und ist in einer Weiterbildung dazu eingerichtet, eine Aussonderungsstation (nicht gezeigt) zu steuern, welche durch die erste Bearbeitungsstation 10 identifizierte HF-Transponder mit erkannten Lage- und/oder Eigenschaftsfehlern aussondert. Diese Aussonderungsstation (nicht gezeigt) kann zum Beispiel zwischen der ersten und der zweiten Bearbeitungsstation entlang der Fördervorrichtung 50 angeordnet sein.

Die zweite Bearbeitungsstation umfasst im gezeigten Beispiel eine Antennenanordnung mit einer ersten HF-Antenne 22. Die erste HF-Antenne 22 hat einen Sendebereich in dem sich, wie in Fig. 1 schematisch gezeigt, bis zu drei HF-Transponder T gleichzeitig befinden können. Zumindest befinden sich jedoch immer zwei HF-Transponder T gleichzeitig vollständig im Sendebereich der ersten HF-Antenne 22, wobei die HF-Transponder T kontinuierlich durch die Fördervorrichtung 50 an der zweiten Bearbeitungsstation 20 vorbeigeführt werden.

Die zweite Bearbeitungsstation 20 spricht jeden der HF-Transponder T mit der ersten HF-Antenne 22 berührungslos mit der zuvor durch die erste Bearbeitungsstation 10 ermittelten transponderspezifischen Kennung (ID) an, wobei das Ansprechen der einzelnen HF-Transponder T in der Reihenfolge ihrer Identifizierung erfolgt. Bereits als fehlerhaft identifizierte und/oder ausgesonderte HF-Transponder können jedoch von einer Ansprechreihenfolge ausgenommen werden. Ist das berührungslose Ansprechen eines zuvor identifizierten HF-Transponders (RFID) durch die zweite Bearbeitungsstation 20 erfolgreich, so fährt die zweite Bearbeitungsstation 20 unmittelbar mit der Übertragung des diesem HF-Transponders zugeordneten ersten Teildatensatzes, welcher zuvor durch die Steuerung ECU ermittelt wurde, an den angesprochenen HF-Transponder fort (Codierung), wobei hierzu ebenfalls die erste HF-Antenne 22 genutzt wird. Die HF-Transponder T sind hierbei dazu ausgebildet, lediglich (Teil-) Datensätze nach einem vorangegangenen erfolgreichen Ansprechen zu erfassen und zu speichern, sodass stets nur der zuvor durch die zweite Bearbeitungsstation 20 angesprochene HF-Transponder codiert wird, obwohl sich zu jedem Zeitpunkt zumindest zwei HF-Transponder im Sendebereich der ersten HF-Antenne 22 befinden. Nach dem Abschluss der Übertragung der Codierung bzw. nach dem Abschluss der Übertragung des ersten Teildatensatzes an einen zuvor angesprochenen HF-Transponder fährt die zweite Bearbeitungsstation 20 unmittelbar mit dem Ansprechen des jeweils nächsten identifizierten HF-Transponders fort, wobei das Förderband 50 während der Ansprech- und Codierungsvorgänge die HF-Transponder T weiter kontinuierlich fördert. Die HF-Transponder T werden somit codiert, während sie sich in einer kontinuierlichen Bewegung relativ zu den Bearbeitungsstationen 10, 20, 30 befinden.

Ist das Ansprechen eines HF-Transponders durch die zweite Bearbeitungsstation 20 nicht erfolgreich, so spricht die zweite Bearbeitungsstation 20 unmittelbar folgend den jeweils nächsten identifizierten HF-Transponder an und überträgt, sofern das Ansprechen erfolgreich ist, den von der Steuerung ECU für diesen HF-Transponder ermittelten ersten Teildatensatz an diesen. Ist auch das Ansprechen des nächsten identifizierten HF-Transponders nicht erfolgreich oder ist die Codierung des nächsten identifizierten HF-Transponders abgeschlossen, spricht die zweite Bearbeitungsstation 20 den zuvor erfolglos angesprochenen HF-Transponder erneut an. Ist das erneute Ansprechen erfolgreich, so erfolgt die Übertragung des von der Steuerung ECU ermittelten ersten Teildatensatzes an den HF-Transponder wie beschrieben. Ist das erneute Ansprechen hingegen nicht erfolgreich, so wird im gezeigten Beispiel die Codierung des erfolglos angesprochenen HF-Transponders endgültig verworfen und mit dem Ansprechen des jeweils nächsten noch nicht codierten identifizierten HF-Transponders fortgefahren. Die kontinuierliche Förderung der HF-Transponder T durch das Förderband 50 wird nicht unterbrochen. Die zweite Bearbeitungsstation 20 ist ferner dazu eingerichtet, der Steuerung ECU eine Information über ein endgültig erfolgloses Ansprechen eines HF-Transponders zu übermitteln. Die Steuerung ECU kann diese Information zum Beispiel an eine zusätzliche Aussonderungsstation (nicht gezeigt) übermitteln, welche die nicht codierten HF-Transponder von der Fördervorrichtung entfernt.

Die dritte Bearbeitungsstation 30 ist analog zur zweiten Bearbeitungsstation 20 aufgebaut und entlang des Förderwegs auf die zweite Bearbeitungsstation 20 folgend angeordnet. Die dritte Bearbeitungsstation 30 hat eine dritte HF-Antenne 32, welche im Wesentlichen gleichartig zur ersten HF-Antenne 22 ausgebildet ist. Analog zur zweiten Bearbeitungsstation 20 spricht die Bearbeitungsstation 30 die HF-Transponder in der Reihenfolge ihrer Identifizierung durch die erste Bearbeitungsstation 10 an, wobei jedoch bereits verworfene, fehlerhafte und/oder ausgesonderte HF-Transponder von einem Ansprechen ausgenommen werden können. Anschließend überträgt die dritte Bearbeitungsstation 30 den zuvor von der Steuerung ECU ermittelten zweiten Teildatensatz an den jeweils angesprochenen HF-Transponder, um die Codierung abzuschließen. Ist das Ansprechen eines HF-Transponders T durch die dritte Bearbeitungsstation 30 nicht erfolgreich, so verfährt diese ebenfalls analog zur zweiten Bearbeitungsstation 20.

Die vierte Bearbeitungsstation 40 ist ebenfalls an dem Förderband 50 angeordnet und dazu eingerichtet die dem Förderband 50 abgewandte Oberfläche der vorbeigeführten HF-Transponder T mit einem optisch erkennbaren Balkencode/Streifencode zu bedrucken, wobei der aufzudruckende Balkencode/Streifencode für jeden HF-Transponder T individuell durch die Steuerung ECU anhand der transponderspezifischen Kennung (ID) ermittelt oder aus der Datenbank DB abgerufen werden kann. In einer Weiterbildung kann die vierte Bearbeitungsstation 40 auch eine zusätzliche Ausleseantenne aufweisen, mit welcher eine erneute Identifikation der HF-Transponder T unmittelbar vor dem Bedrucken erfolgen kann, wobei die vierte Bearbeitungsstation 40 den aufzudruckenden Balkencode/Streifencode entweder selbstständig ermitteln oder aus der Datenbank DB abrufen kann.

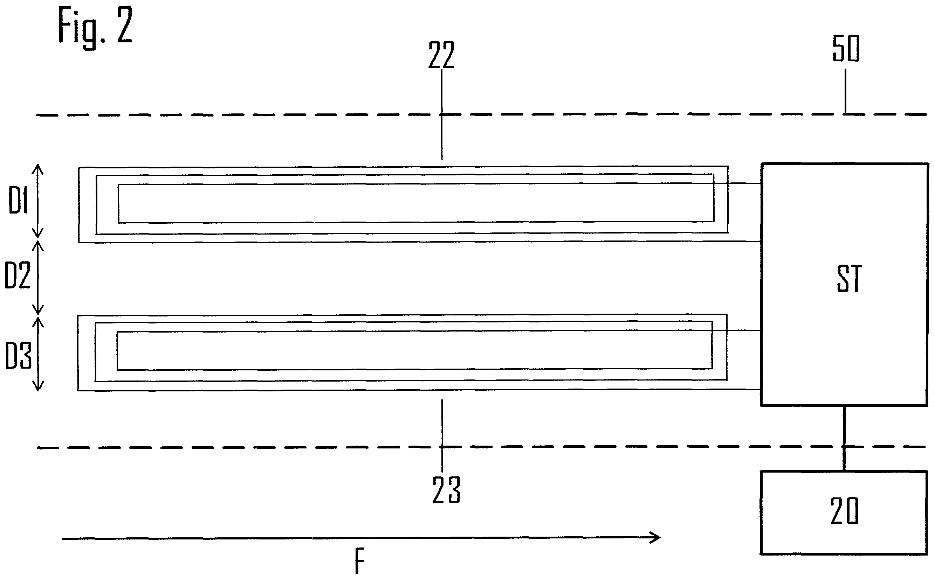

Fig. 2 zeigt eine alternative Ausgestaltung der Antennenanordnung der zweiten Bearbeitungsstation in einer um 90° gedrehten Perspektive (Draufsicht). Das über die zweite Bearbeitungsstation 20 geführte (bzw. an der zweiten Bearbeitungsstation 20 vorbeigeführte) Förderband 50 ist lediglich schematisch durch unterbrochene Linien angedeutet, um die Ansicht der Antennenanordnung nicht zu verdecken.

Neben der ersten HF-Antenne 22 umfasst die alternative Antennenanordnung eine zweite HF-Antenne 23 welche gleichartig zur ersten HF-Antenne 22 ausgestaltet ist. Die erste HF-Antenne 22 hat eine Querausdehnung D1, wobei die Querausdehnung die maximale räumliche Ausdehnung der Antenne orthogonal zur Förderrichtung F des Förderbands 50 bezeichnet. Die zweite HF-Antenne 23 hat eine Querausdehnung D3, welche aufgrund der gleichartigen Ausgestaltung der beiden HF-Antennen 22, 23 gleich der Querausdehnung D1 ist. Weiter sind die beiden HF-Antennen parallel zueinander und jeweils parallel zur Förderrichtung F des Förderbands 50 angeordnet und mit einer Distanz D2 orthogonal zur Förderrichtung F voneinander beabstandet. Im gezeigten Beispiel entspricht die Distanz D2 den Querausdehnungen D1, D3 der beiden parallelen HF-Antennen.

Sowohl die erste HF-Antenne 22 als auch die zweite HF-Antenne 23 werden über einen gemeinsam genutzten Spannungsteiler ST mit elektrischer Energie versorgt. Die zweite Bearbeitungsstation 20 kann hierbei dazu eingerichtet sein, eine Codierinformation, zum Beispiel einen von der Steuerung ECU ermittelten (Teil-)Datensatz, an einen über das Förderband 50 geführten HF-Transponder zu übertragen und hierzu gleichzeitig die erste HF-Antenne 22 und die zweite HF-Antenne 23 zu nutzen. Die erste und die zweite HF-Antenne können hierbei gemeinsam zur berührungslosen Übertragung von Daten genutzt werden. Ein im Sendebereich der HF-Antennen abgegebenes HF-Sendesignal der beiden HF-Antennen kann hierdurch verbessert, zum Beispiel verstärkt, werden.

Alternativ können mit der in Fig. 2 gezeigten Anordnung auch jeweils zwei orthogonal zu Förderrichtung F nebeneinander geführte HF-Transponder codiert werden. Die Fertigungsrate der Vorrichtung kann so verdoppelt werden.

Ein Vorteil der in Fig. 2 gezeigten Antennenanordnung ist es, dass die zweite Bearbeitungsstation für eine Umstellung eines Fertigungsbetriebs von einem "einspurigen" HF-Transponder-Codierungsbetrieb zu einem "zweispurigen" HF-Transponder-Codierungsbetrieb nicht strukturell angepasst werden muss. So können zum Beispiel vergleichsweise große HF-Transponder in einem "einspurigen" Betrieb der Vorrichtung codiert werden, während vergleichsweise kleine HF-Transponder in einem "zweispurigen" Betrieb der Vorrichtung codiert werden können.

Die in Fig. 2 gezeigte Anordnung kann analog auf eine Antennenanordnung der dritten Bearbeitungsstation 30 übertragen werden, welche eine dritte und eine vierte HF-Antenne umfassen kann.

Die vorangehend beschriebenen Varianten des Verfahrens und der Vorrichtung dienen lediglich dem besseren Verständnis der Struktur, der Funktionsweise und der Eigenschaften der vorgestellten Lösung; sie schränken die Offenbarung nicht etwa auf die Ausführungsbeispiele ein. Die Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen.

## Patentansprüche

1. Eine Vorrichtung (100) für eine Codierung von HF-Transpondern (T) umfasst:
- eine Fördervorrichtung (50), welche dazu angeordnet und ausgebildet ist, HF-Transponder (T) an einer Mehrzahl von Bearbeitungsstationen in einer kontinuierlichen Bewegung vorbeizuführen;
- eine erste Bearbeitungsstation (10), welche dazu angeordnet und ausgebildet ist, jeweils an ihr vorbeigeführte HF-Transponder (T) zu identifizieren; und
- eine zweite Bearbeitungsstation (20) mit zumindest einer ersten HF-Antenne (22), wobei
-- die erste HF-Antenne (22) einen Sendebereich aufweist, welcher dazu angeordnet und ausgebildet ist, eine Mehrzahl der durch die Fördervorrichtung (50) an der zweiten Bearbeitungsstation (20) vorbeigeführten HF-Transponder (T) gleichzeitig zu erfassen,
-- die zweite Bearbeitungsstation (20) dazu ausgebildet ist, die zuvor durch die erste Bearbeitungsstation (10) identifizierten HF-Transponder (T) mit der ersten HF-Antenne (22) anzusprechen und anschließend, sofern ein Ansprechen eines jeweils zuvor identifizierten HF-Transponders (T) erfolgreich war, den jeweils durch den Sendebereich der ersten HF-Antenne (22) erfassten angesprochenen HF-Transponder (T) zur Übertragung von Codierungsdaten auszuwählen, und
-- Codierungsdaten an den ausgewählten HF-Transponder (T) zu übertragen, wobei die übertragenen Codierungsdaten abhängig von einer Identifikation des ausgewählten HF-Transponders (T) durch die erste Bearbeitungsstation (10) ermittelt sind,
**dadurch gekennzeichnet, dass**
die zweite Bearbeitungsstation (20) ferner dazu eingerichtet ist, im Falle eines nicht erfolgreichen Ansprechens eines ersten zuvor identifizierten HF-Transponders unmittelbar mit dem Ansprechen eines dem ersten identifizierten HF-Transponder folgenden weiteren identifizierten HF-Transponders fortzufahren und diesen, sofern das Ansprechen des weiteren identifizierten HF-Transponders erfolgreich war, zu codieren, und nach dem Abschluss der Codierung des weiteren identifizierten HF-Transponders erneut den ersten identifizierten HF-Transponder anzusprechen.

2. Vorrichtung (100) nach Anspruch 1, wobei
die Fördervorrichtung (50) ein über Rollen geführtes Förderband ist, welches dazu geeignet ist eine Mehrzahl von HF-Transpondern (T) jeweils nacheinander an der Mehrzahl von Bearbeitungsstationen in einer kontinuierlichen Bewegung vorbeizuführen, und/oder
die Fördervorrichtung (50) dazu geeignet ist, jeweils eine Mehrzahl von orthogonal zu einer Förderrichtung (F) nebeneinander angeordneten HF-Transpondern und/oder eine Mehrzahl von entlang der Förderrichtung (F) hintereinander angeordneten HF-Transpondern (T) an der Mehrzahl der Bearbeitungsstationen vorbeizuführen.

3. Vorrichtung (100) nach einem der vorangegangenen Ansprüche, wobei
die erste Bearbeitungsstation (10) eine Ausleseantenne (12) umfasst, welche dazu geeignet ist, einen an der ersten Bearbeitungsstation (10) vorbeigeführten HF-Transponder (T) zu identifizieren, und/oder
die erste Bearbeitungsstation Abschirmungselemente (14) umfasst, welche dazu angeordnet und ausgebildet sind, jeweils alle bis auf einen an der ersten Bearbeitungsstation (10) vorbeigeführten HF-Transponder (T) von einem Erfassungsbereich der Ausleseantenne (12) elektromagnetisch abzuschirmen, und/oder
die erste Bearbeitungsstation (10) zumindest einen optisch erfassenden Sensor (16), zum Beispiel einen Kamerasensor, umfasst, welcher dazu geeignet ist, einen HF-Transponder (T) anhand optisch erkennbarer Merkmale zu identifizieren und/oder einen Eigenschaftsfehler eines HF-Transponders (T) zu erfassen und/oder einen Lagefehler eines HF-Transponders (T) auf der Fördervorrichtung (50) zu erfassen.

4. Vorrichtung (100) nach einem der vorangegangenen Ansprüche, wobei
die zweite Bearbeitungsstation (20) weiter eine zweite HF-Antenne (23) umfasst, wobei vorzugsweise
die erste HF-Antenne (22) und die zweite HF-Antenne (23) gleichartig ausgestaltet sind, und/oder
die erste HF-Antenne (22) und die zweite HF-Antenne (23) durch einen gemeinsamen Spannungsteiler (ST) mit elektrischer Energie versorgt werden.

5. Vorrichtung (100) nach einem der vorangegangenen Ansprüche, weiter umfassend
eine dritte Bearbeitungsstation (30) mit einer dritten HF-Antenne (32) und/oder einer vierten HF-Antenne, wobei
-- die dritte HF-Antenne (32) und/oder die vierte HF-Antenne jeweils einen Sendebereich aufweisen, welcher dazu angeordnet und ausgebildet ist, eine Mehrzahl der durch die Fördervorrichtung (50) an der dritten Bearbeitungsstation (30) vorbeigeführten HF-Transponder (T) gleichzeitig zu erfassen,
-- die dritte Bearbeitungsstation (30) dazu ausgebildet ist, jeweils einen der durch den Sendebereich der dritten (32) und/oder vierten HF-Antenne erfassten HF-Transponder (T) zur Übertragung von Daten auszuwählen, und
-- Daten an den ausgewählten HF-Transponder (T) zu übertragen, wobei die übertragenen Daten abhängig von einer Identifikation des ausgewählten HF-Transponders (T) durch die erste Bearbeitungsstation (10) ermittelt sind.

6. Vorrichtung (100) nach einem der vorangegangenen Ansprüche, weiter umfassend
eine vierte Bearbeitungsstation (40), welche dazu angeordnet und ausgebildet ist, jeweils eine Oberfläche von vorbeigeführten HF-Transpondern (T) zu bedrucken, zum Beispiel mit einem Streifen- oder QR-Code.

7. Vorrichtung (100) nach einem der vorangegangenen Ansprüche, weiter umfassend
eine Datenbank (DB), welche jeweils an einen bestimmten HF-Transponder (T) zu übertragende Daten speichert, wobei vorzugsweise die Vorrichtung (100) weiterhin eine Steuerung (ECU) umfasst, welche dazu ausgebildet ist, abhängig von einer Identifizierung eines HF-Transponders (T) durch die erste Bearbeitungsstation (10) in der Datenbank (DB) gespeicherte Daten zu ermitteln, wobei
die ermittelten Daten mit einer Information, welche die Daten dem jeweils identifizierten HF-Transponder (T) zuordnet, an die zweite und/oder dritte Bearbeitungsstation (20, 30)übertragenen werden.

8. Ein Verfahren, welches mit einer Vorrichtung (100) nach einem der vorangegangenen Ansprüche ausgeführt wird, umfasst die Schritte:
- Kontinuierliches Fördern von HF-Transpondern, (T) in einer Förderrichtung (F), vorbei an einer Mehrzahl von Bearbeitungsstationen, durch eine Fördervorrichtung (50);
- Identifizieren eines HF-Transponders (T) mit einer ersten Bearbeitungsstation (10);
- Erfassen des identifizierten HF-Transponders (T) mit einer zweiten Bearbeitungsstation (20), wobei
die zweite Bearbeitungsstation (20) zumindest eine erste HF-Antenne (22) mit einen Sendebereich aufweist, welcher dazu angeordnet und ausgebildet ist, eine Mehrzahl der durch die Fördervorrichtung an der zweiten Bearbeitungsstation (20) vorbeigeführten HF-Transponder (T) gleichzeitig zu erfassen und die zweite Bearbeitungsstation (20) dazu ausgebildet ist, die zuvor durch die erste Bearbeitungsstation (10) identifizierten HF-Transponder (T) mit der ersten HF-Antenne (22) anzusprechen und anschließend, sofern ein Ansprechen eines jeweils zuvor identifizierten HF-Transponders (T) erfolgreich war, den identifizierten angesprochenen HF-Transponder (T) aus einer Mehrzahl von erfassten HF-Transpondern zur Übertragung von Codierungsdaten auszuwählen;
- Übertragen von Codierungsdaten an den identifizierten HF-Transponder (T) mit der zweiten Bearbeitungsstation (20), wobei
die übertragenen Codierungsdaten abhängig von einer Identifikation des ausgewählten HF-Transponders (T) durch die erste Bearbeitungsstation (10) ermittelt sind, und wobei
im Falle eines nicht erfolgreichen Ansprechens eines ersten zuvor identifizierten HF-Transponders unmittelbar mit dem Ansprechen eines dem ersten identifizierten HF-Transponder folgenden weiteren identifizierten HF-Transponders fortgefahren wird, und dieser, sofern das Ansprechen des weiteren identifizierten HF-Transponders erfolgreich ist, codiert wird, und nach dem Abschluss der Codierung des weiteren identifizierten HF-Transponders erneut der erste identifizierte HF-Transponder angesprochen wird.

9. Verfahren nach dem vorangegangenen Anspruch, weiter umfassend zumindest einen der Schritte:
- Erfassen des identifizierten HF-Transponders (T) mit einer dritten Bearbeitungsstation (30), wobei
die dritte Bearbeitungsstation (30) zumindest eine dritte HF-Antenne (32) mit einen Sendebereich aufweist, welcher dazu angeordnet und ausgebildet ist, eine Mehrzahl der durch die Fördervorrichtung (50) an der dritten Bearbeitungsstation (30) vorbeigeführten HF-Transponder (T) gleichzeitig zu erfassen und die dritte Bearbeitungsstation (30) dazu ausgebildet ist, den identifizierten HF-Transponder (T) aus einer Mehrzahl von erfassten HF-Transpondern (T) zur Übertragung von Daten auszuwählen;
- Übertragen von Daten an den identifizierten HF-Transponder (T) mit der dritten Bearbeitungsstation (30), wobei
die übertragenen Daten abhängig von einer Identifikation des ausgewählten HF-Transponders (T) durch die erste Bearbeitungsstation (10) ermittelt sind;
- Bedrucken einer Oberfläche des identifizierten Transponders (T) mit einer vierten Bearbeitungsstation (40).

## Claims

1. An apparatus (100) for encoding RF transponders (T) comprising:
- a conveyor (50) arranged and adapted to feed RF transponders (T) past a plurality of processing stations in a continuous motion;
- a first processing station (10) arranged and adapted to identify respective RF transponders (T) passing by it; and
- a second processing station (20) having at least a first RF antenna (22), wherein
-- the first RF antenna (22) has a transmitting area arranged and configured to simultaneously detect a plurality of the RF transponders (T) passed by the conveyor (50) at the second processing station (20),
-- the second processing station (20) is designed to address the RF transponders (T) previously identified by the first processing station (10) with the first RF antenna (22) and subsequently, if an addressing of a respective previously identified RF transponder (T) was successful, to select the respective addressed RF transponder (T) detected by the transmission range of the first RF antenna (22) for the transmission of coding data, and
-- transmitting coding data to the selected RF transponder (T), the transmitted coding data being determined as a function of an identification of the selected RF transponder (T) by the first processing station (10),
**characterized in that**
said second processing station (20) is further adapted, in the event of an unsuccessful addressing of a first previously identified RF transponder, to immediately proceed with the addressing of a further identified RF transponder following said first identified RF transponder and to encode said further identified RF transponder, provided that the addressing of said further identified RF transponder was successful, and, after completion of the encoding of said further identified RF transponder, to again address said first identified RF transponder.

2. Apparatus (100) according to claim 1, wherein
the conveyor device (50) is a conveyor belt guided over rollers, which is suitable for guiding a plurality of RF transponders (T) one after the other past the plurality of processing stations in a continuous movement, and/or
the conveying device (50) is suitable for respectively guiding a plurality of RF transponders arranged next to one another orthogonally to a conveying direction (F) and/or a plurality of RF transponders (T) arranged one behind the other along the conveying direction (F) past the plurality of processing stations.

3. Apparatus (100) according to any one of the preceding claims, wherein
the first processing station (10) comprises a read-out antenna (12) adapted to identify an RF transponder (T) passing the first processing station (10), and/or
the first processing station comprises shielding elements (14) which are arranged and designed to electromagnetically shield all but one RF transponder (T) passing the first processing station (10) from a detection range of the read-out antenna (12), and/or
the first processing station (10) comprises at least one optically detecting sensor (16), for example a camera sensor, which is suitable for identifying an RF transponder (T) on the basis of optically detectable features and/or for detecting a property error of an RF transponder (T) and/or for detecting a position error of an RF transponder (T) on the conveyor device (50).

4. Apparatus (100) according to any one of the preceding claims, wherein
the second processing station (20) further comprises a second RF antenna (23), wherein preferably
the first HF antenna (22) and the second HF antenna (23) are of identical design, and/or
the first RF antenna (22) and the second RF antenna (23) are supplied with electrical energy by a common voltage divider (ST).

5. Apparatus (100) according to any one of the preceding claims, further comprising
a third processing station (30) with a third RF antenna (32) and/or a fourth RF antenna, wherein
-- the third RF antenna (32) and/or the fourth RF antenna each have a transmitting area arranged and configured to simultaneously detect a plurality of the RF transponders (T) passed by the conveyor (50) at the third processing station (30),
-- the third processing station (30) is adapted to select a respective one of the RF transponders (T) detected by the transmission range of the third (32) and/or fourth RF antenna for the transmission of data, and
-- transmit data to the selected RF transponder (T), the transmitted data being determined in dependence on an identification of the selected RF transponder (T) by the first processing station (10).

6. Apparatus (100) according to any one of the preceding claims, further comprising
a fourth processing station (40) arranged and adapted to print, for example with a bar code or QR code, on a surface of each of the RF transponders (T) being passed.

7. Apparatus (100) according to any one of the preceding claims, further comprising
a database (DB) which stores data to be transmitted to a particular RF transponder (T) at a time, preferably the apparatus (100) further comprising a controller (ECU) which is adapted to determine data stored in the database (DB) in dependence on an identification of an RF transponder (T) by the first processing station (10), wherein
the determined data are transmitted to the second and/or third processing station (20, 30) with information which assigns the data to the respectively identified RF transponder (T).

8. A method carried out with an apparatus (100) according to any one of the preceding claims, comprising the steps of:
- continuously conveying RF transponders (T) in a conveying direction (F), past a plurality of processing stations, by a conveying device (50);
- identifying an RF transponder (T) with a first processing station (10);
- detecting the identified RF transponder (T) with a second processing station (20), wherein
the second processing station (20) has at least one first HF antenna (22) with a transmission range which is arranged and designed to simultaneously detect a plurality of the HF transponders (T) which are led past the second processing station (20) by the conveying device, and the second processing station (20) is designed for this purpose to address the RF transponders (T) previously identified by the first processing station (10) with the first RF antenna (22) and then, if an addressing of a respective previously identified RF transponder (T) was successful, to select the identified addressed RF transponder (T) from a plurality of detected RF transponders for the transmission of coding data;
- transmitting coding data to the identified RF transponder (T) with the second processing station (20), wherein
the transmitted coding data are determined in dependence on an identification of the selected RF transponder (T) by the first processing station (10), and wherein
in the event of an unsuccessful addressing of a first previously identified RF transponder, the addressing of a further identified RF transponder following the first identified RF transponder is continued immediately, and this is encoded if the addressing of the further identified RF transponder is successful, and after completion of the addressing of the further identified RF transponder, the first identified RF transponder is addressed again.

9. A method according to the preceding claim, further comprising at least one of the steps:
- detecting the identified RF transponder (T) with a third processing station (30), wherein
the third processing station (30) comprises at least one third RF antenna (32) having a transmission range arranged and adapted to simultaneously detect a plurality of RF transponders (T) passing the third processing station (30) by the conveyor (50), and the third processing station (30) is adapted to select the identified RF transponder (T) from a plurality of detected RF transponders (T) for transmission of data;
- transmitting data to the identified RF transponder (T) with the third processing station (30), wherein
the transmitted data are determined depending on an identification of the selected RF transponder (T) by the first processing station (10);
- printing a surface of the identified transponder (T) with a fourth processing station (40).

## Revendications

1. Appareil (100) pour coder des transpondeurs RF (T) comprenant:
- un convoyeur (50) agencé et adapté pour faire passer des transpondeurs RF (T) devant une pluralité de stations de traitement dans un mouvement continu ;
- une première station de traitement (10) agencée et adaptée pour identifier les transpondeurs RF (T) qu'elle a respectivement fait passer; et
- une deuxième station de traitement (20) avec au moins une première antenne RF (22), dans laquelle
-- la première antenne RF (22) a une zone d'émission agencée et configurée pour détecter simultanément une pluralité de transpondeurs RF (T) passés par le convoyeur (50) au niveau du second poste de traitement (20),
-- la deuxième station de traitement (20) est conçue pour adresser les transpondeurs RF (T) identifiés précédemment par la première station de traitement (10) avec la première antenne RF (22) et ensuite, si un adressage d'un transpondeur RF (T) respectif identifié précédemment a réussi, pour sélectionner le transpondeur RF (T) adressé respectif détecté par la portée de transmission de la première antenne RF (22) pour la transmission de données de codage, et
-- transmettre des données de codage au transpondeur RF sélectionné (T), les données de codage transmises étant déterminées en fonction d'une identification du transpondeur RF sélectionné (T) par la première station de traitement (10), **caractérisé en ce que**
la deuxième station de traitement (20) est en outre adaptée, dans le cas d'un adressage infructueuse d'un premier transpondeur RF identifié précédemment, pour procéder immédiatement à l'adressage d'un autre transpondeur RF identifié suivant le premier transpondeur RF identifié et pour le coder, à condition que l'adresser de l'autre transpondeur RF identifié soit réussie, et, après l'achèvement du codage de l'autre transpondeur RF identifié, pour adresser à nouveau le premier transpondeur RF identifié.

2. Appareil (100) selon la revendication 1, dans lequel
le dispositif de transport (50) est une bande transporteuse guidée par rouleaux adaptée pour guider une pluralité de transpondeurs RF (T) devant chacune de la pluralité de stations de traitement tour à tour dans un mouvement continu, et/ou le dispositif de transport (50) est adapté pour guider respectivement une pluralité de transpondeurs RF disposés les uns à côté des autres orthogonalement à une direction de transport (F) et/ou une pluralité de transpondeurs RF (T) disposés les uns derrière les autres le long de la direction de transport (F) devant la pluralité de postes de traitement.

3. Appareil (100) selon l'une quelconque des revendications précédentes, dans lequel
la première station de traitement (10) comprend une antenne de lecture (12) adaptée pour identifier un transpondeur RF (T) passant par la première station de traitement (10), et/ou
le premier poste de traitement comprend des éléments de blindage (14) qui sont agencés et conçus pour blinder électromagnétiquement tous les transpondeurs RF sauf un (T) passant par le premier poste de traitement (10) d'une plage de détection de l'antenne de lecture (12), et/ou
le premier poste de traitement (10) comprend au moins un capteur de détection optique (16), par exemple un capteur de caméra, qui est approprié pour identifier un transpondeur RF (T) sur la base de caractéristiques détectables optiquement et/ou pour détecter une erreur de propriété d'un transpondeur RF (T) et/ou pour détecter une erreur de position d'un transpondeur RF (T) sur le dispositif de convoyage (50).

4. Appareil (100) selon l'une quelconque des revendications précédentes, dans lequel
la deuxième station de traitement (20) comprend en outre une deuxième antenne RF (23), dans laquelle de préférence
la première antenne HF (22) et la deuxième antenne HF (23) sont de conception identique, et/ou
la première antenne HF (22) et la deuxième antenne HF (23) sont alimentées en énergie électrique par un diviseur de tension commun (ST).

5. Appareil (100) selon l'une quelconque des revendications précédentes, comprenant en outre:
une troisième station de traitement (30) avec une troisième antenne RF (32) et/ou une quatrième antenne RF, dans laquelle
-- la troisième antenne RF (32) et/ou la quatrième antenne RF ont chacune une zone d'émission agencée et configurée pour détecter simultanément une pluralité de transpondeurs RF (T) passés par le convoyeur (50) au niveau du troisième poste de traitement (30),
-- la troisième station de traitement (30) est adaptée pour sélectionner un transpondeur respectif parmi les transpondeurs RF (T) détectés par la portée de transmission de la troisième (32) et/ou de la quatrième antenne RF pour la transmission de données, et
-- transmettre des données au transpondeur RF sélectionné (T), les données transmises étant déterminées en fonction d'une identification du transpondeur RF sélectionné (T) par la première station de traitement (10).

6. Appareil (100) selon l'une quelconque des revendications précédentes, comprenant en outre:
une quatrième station de traitement (40) agencée et adaptée pour imprimer, par exemple avec un code à barres ou un code QR, sur une surface de chacun des transpondeurs RF (T) passant à proximité.

7. Appareil (100) selon l'une quelconque des revendications précédentes, comprenant en outre
une base de données (DB) qui stocke des données à transmettre à un transpondeur RF particulier (T) à un moment donné, de préférence l'appareil (100) comprenant en outre un contrôleur (ECU) qui est adapté pour déterminer des données stockées dans la base de données (DB) en fonction d'une identification d'un transpondeur RF (T) par le premier poste de traitement (10), dans laquelle
les données déterminées sont transmises à la deuxième et/ou à la troisième station de traitement (20, 30) avec des informations qui attribuent les données au transpondeur HF (T) respectivement identifié.

8. Procédé mis en œuvre avec un appareil (100) selon l'une quelconque des revendications précédentes, comprenant les étapes suivantes:
- transport continu de transpondeurs RF (T) dans une direction de transport (F), devant une pluralité de stations de traitement, par un dispositif de transport (50);
- identification d'un transpondeur RF (T) avec une première station de traitement (10);
- détecter le transpondeur RF identifié (T) avec une seconde station de traitement (20), dans laquelle
le deuxième poste de traitement (20) présente au moins une première antenne HF (22) avec une portée d'émission qui est disposée et conçue pour adresser simultanément une pluralité des transpondeurs HF (T) passés par le dispositif de transport au deuxième poste de traitement (20), et le deuxième poste de traitement (20) est conçu à cet effet, pour adresser les transpondeurs RF (T) préalablement identifiés par la première station de traitement (10) avec la première antenne RF (22) et ensuite, si un adressage d'un transpondeur RF (T) respectif préalablement identifié a réussi, pour sélectionner le transpondeur RF (T) adressé identifié parmi une pluralité de transpondeurs RF détectés pour la transmission de données de codage;
- Transmettre des données de codage au transpondeur RF identifié (T) avec la deuxième station de traitement (20), dans lequel
les données de codage transmises sont déterminées en fonction d'une identification du transpondeur RF sélectionné (T) par la première station de traitement (10), et dans laquelle
en cas d'un adressage infructueuse d'un premier transpondeur RF identifié précédemment, l'adressage d'un autre transpondeur RF identifié suivant le premier transpondeur RF identifié est immédiatement poursuivie, et celle-ci est codée si I adressage de l'autre transpondeur RF identifié est réussie, et après l'achèvement du codage de l'autre transpondeur RF identifié, le premier transpondeur RF identifié est à nouveau adressé.

9. Procédé selon la revendication précédente, comprenant en outre au moins une des étapes suivantes:
- Détecter le transpondeur RF identifié (T) avec une troisième station de traitement (30), dans laquelle
le troisième poste de traitement (30) comprend au moins une troisième antenne RF (32) ayant une portée de transmission agencée et adaptée pour détecter simultanément une pluralité de transpondeurs RF (T) passés par le convoyeur (50) au niveau du troisième poste de traitement (30) et le troisième poste de traitement (30) est adapté pour sélectionner le transpondeur RF identifié (T) parmi une pluralité de transpondeurs RF détectés (T) pour la transmission de données;
- transmettre des données au transpondeur RF identifié (T) avec le troisième poste de traitement (30), dans lequel
les données transmises sont déterminées en fonction d'une identification du transpondeur RF sélectionné (T) par la première station de traitement (10);
- impression d'une surface du transpondeur identifié (T) avec une quatrième station de traitement (40).
